# EUROPÄISCHE PATENTANMELDUNG

(11) **EP 0 993 979 A2**
(43) Veröffentlichungstag der Anmeldung: **19.04.2000**
(21) Anmeldenummer: 99118143.9
(22) Anmeldetag: 11.09.1999
(51) Int. Cl.: B60J 7/14

(54) **Fahrzeug mit einem mehrteiligen, versenkbaren Fahrzeugverdeck**

(30) Priorität: 17.10.1998 DE 19847983
(71) Anmelder: DaimlerChrysler AG, 70567 Stuttgart (DE)
(72) Erfinder: Gürtler, Dieter, 71120 Grafenau (DE); Jambor, Arno, 71665 Vaihingen (DE); Wagner, Oliver, 71155 Altdorf (DE)

(57) **Zusammenfassung**

Ein Fahrzeug mit einem mehrteiligen, versenkbaren Fahrzeugverdeck (1) weist wenigstens zwei biegesteife Verdeckelemente auf, wobei die Verdeckelemente schwenkbar miteinander und über wenigstens ein Verdeckelement schwenkbar mit der Fahrzeugkarosserie (13) verbunden sind. Zur Verbindung der Verdeckelemente (2,3,4) miteinander und/oder mit einer Fahrzeugkarosserie (13) sind Drehgelenke (5) vorgesehen, wobei jede Verbindung wenigstens ein antreibbares Drehgelenk (5) aufweist.

## Beschreibung

Die Erfindung betrifft ein Fahrzeug mit einem mehrteiligen, versenkbaren Fahrzeugverdeck nach der im Oberbegriff von Anspruch 1 näher definierten Art.

Allgemein bekannt sind versenkbare Faltdächer, insbesondere auch sogenannte Hardtops aus festen Karosserieteilen.

In der gattungsgemäßen DE 44 45 944 C1 wird eine solche Dachkonstruktion, die hier aus lediglich zwei Elementen bestent, beschrieben. Die Bewegung und die Koordination der einzelnen Dachteile erfolgt dabei über eine sehr komplexe Mechanik mit Steuerhebeln.

Weitere Faltdachanordnungen und Steuerelemente werden in der DE 195 39 086 C1, der DE 43 16 485 A1, der DE 39 03 358 A1 und der DE 195 20 648 A1 beschrieben. Die Führung der Verdeckelemente erfolgt dabei immer in Leitschienen oder mit Gestängen und Steuerhebeln.

Die Relativbewegungen der Dachteile zueinander müssen also mit hohem mechanischem Aufwand realisiert werden, so ist z.B. immer eine spezifische, auf die jeweilige geometrische Form des Hardtops ausgelegte Kinematik notwendig. Dies steht im krassen Gegensatz zu den ökonomisch, logistisch und ökologisch sinnvollen Bemühungen um eine Standardisierung und Reduzierung der Teile- und Typenvielfalt von Fahrzeugelementen.

Ein weiterer Nachteil bei der Verwendung von Kulissenführungen und Steuergestängen liegt in der oft schlechten Funktionsqualität. Diese Elemente neigen insbesondere bei mehrteiligen, vor allem bei mehr als zweiteiligen Fahrzeugverdecken, zu einem Verkanten in den Führungen.

Auch in den Dichtungsdurchschneidungen durch die Steuerhebel ist ein Nachteil zu sehen. Eine große Rolle spielt dieser Punkt bei der qualitativ schlechteren Einschätzung von Hardtops gegenüber festen Fahrzeugverdecken durch eine Vielzahl von Fahrzeugbenutzern.

Neben den rein mechanischen Problemen bezüglich der Festigkeit und der Funktionsweise des versenkbaren Fahrzeugverdecks, stellt zunehmend auch die eingeengte Möglichkeit der Wahl der Versenkungsbahnen ein Problem dar, insbesondere mit Hinsicht auf im Fahrzeug befindliche Passagiere und die Betätigung des versenkbaren Fahrzeugverdecks in eingeengten Räumen (z.B. Garagen).

Die EP 0 835 778 A1, EP 0 835 779 A1 und die EP 0 835 780 A1 beziehen sich auf solche versenkbaren Faltdächer und verdeutlichen die beschriebenen Probleme am Beispiel von dreiteiligen Hardtops.

Eine angetriebene- Drehverbindung wird in der DE 44 06 376 A1 beschrieben, wobei der fluidisch betätigbare Drehantrieb noch von sehr komplexem und geometrisch ausladendem Aufbau ist. Mit einem solchen Antrieb ist man jedoch in der Lage, auch langsame und äußerst gleichmäßige Drehbewegungen über einen großen Drehmomentbereich hinweg zu realisieren. Derzeit finden solche Antriebe im Bereich der Fahrzeugfederung Verwendung, wie dies auch in der DE 39 37 986 A1 offenbart ist.

Es ist daher die Aufgabe der Erfindung, ein Fahrzeug mit einem mehrteiligem, versenkbaren Fahrzeugverdeck zu schaffen, wobei sich das Fahrzeugverdeck durch einen möglichst leichten und einfachen Bewegungsapparat mit geringer Teilezahl auszeichnet, und wobei dieser in der Lage sein sollte, jeden beliebigen vom Benutzer gewünschten Versenkweg für das mehrteilige, versenkbare Fahrzeugverdeck zu realisieren.

Erfindungsgemäß wird die Aufgabe durch die im kennzeichnenden Teil von Anspruch 1 genannten Merkmale gelöst.

Durch die Verbindung der einzelnen Verdeckelemente untereinander bzw. mit der Fahrzeugkarosserie ausschließlich über Drehgelenke bzw. Aktiv-Drehgelenke wird das schwere, sehr komplexe und leicht störanfällige Gestänge komplett eingespart, sowie Lagerung und Antrieb in einem Bauteil zusammengefaßt. Probleme mit der Abdichtung des Fahrzeugverdecks, welche von Dichtungsdurchschneidungen durch das Gestänge herrühren, treten damit nicht mehr auf. Prinzipbedingt kann es zu keinen Schwierigkeiten mit dem Gestänge, wie z.B. Klappern oder Verklemmen kommen.

Die antreibbaren Drehgelenke lassen sich völlig unabhängig voneinander betreiben, was es ermöglicht verschiedenen Versenkwege für das mehrteilige, versenkbare Fahrzeugverdeck mit einer einfachen elektrischen oder elektromechanischen Steuerung zu realisieren.

In einer besonders vorteilhaften Ausgestaltung der Erfindung werden die antreibbaren Drehgelenke fluidisch betrieben, wodurch neben der Montage der Drehgelenke ausschließlich Leitungen für den fluidischen Antrieb im Fahrzeugverdeck verlegt werden müssen.

Weitere vorteilhafte Ausgestaltungen der Erfindung ergeben sich aus den weiteren Unteransprüchen und aus dem nachfolgend anhand der Zeichnung prinzipmäßig dargestellten Ausführungsbeispiel.

Es zeigt:
- Fig. 1: eine Fahrzeugverdeckanordnung am Beispiel eines dreiteiligen versenkbaren Fahrzeugverdecks, welches in vier verschiedenen Positionen dargestellt ist;
- Fig. 2: eine Vergrößerung eines antreibbaren Drehgelenke (Detail II) aus Fig.1;
- Fig. 3: ein Fahrzeug mit einem verschlossenen mehrteiligen, versenkbaren Fahrzeugverdeck;
- Fig. 4: ein Fahrzeug gemäß Fig. 3 mit teilweise geöffnetem Fahrzeugverdeck;
- Fig. 5: ein Fahrzeug gemäß Fig. 3 mit teilweise versenktem Fahrzeugverdeck; und
- Fig. 6: ein Fahrzeug gemäß Fig. 3 mit versenktem Fahrzeugverdeck.

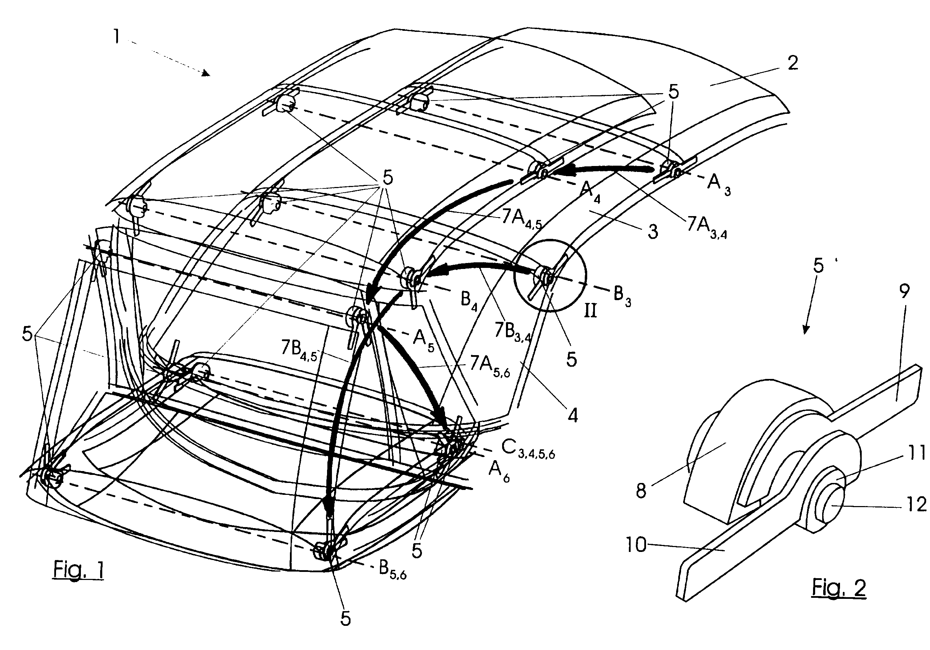

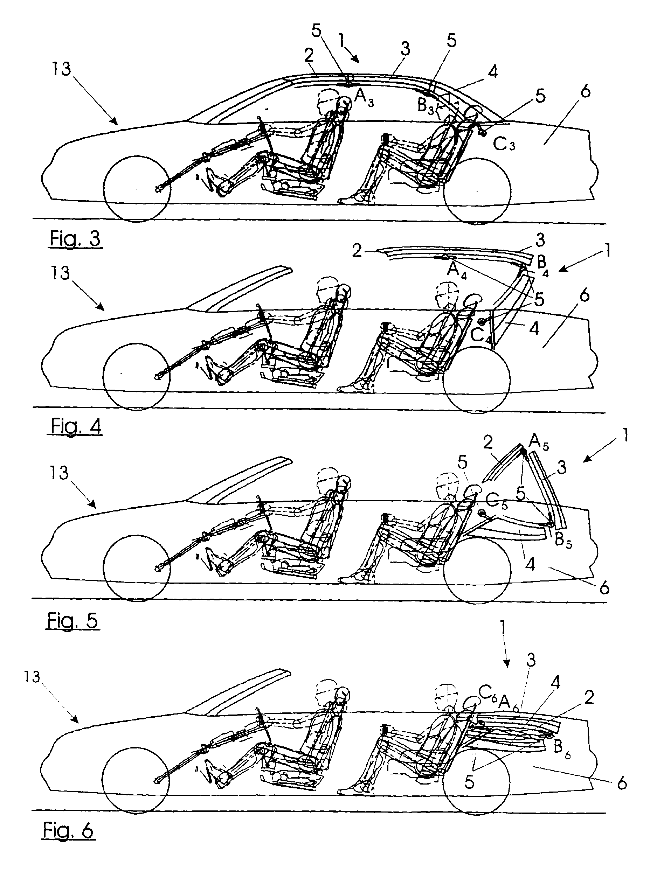

Fig. 1 zeigt ein mehrteiliges, versenkbares Fahrzeugverdeck 1, welches hier in vier verschiedenen Positionen dargestellt ist. Diese Positionen finden sich in einer Seitenansicht auch in den Figuren 3 bis 6 wieder. Das Fahrzeugverdeck 1 weist drei Verdeckelemente 2, 3, 4 auf. Das vordere Verdeckelement 2 ist über die Drehachse A, welche zwei seitlich angeordnete Aktiv-Drehgelenke 5 aufweist, mit dem mittleren Verdeckelement 3 verbunden. Die gegenüberliegende Seite des mittleren Verdeckelements 3 ist mit der Drehachse B mit dem hinteren Verdeckelement 4 gekoppelt. Das hintere Verdeckelernent 4 weist an seinem gegenüberliegenden Ende die Drehachse C auf, welche eine Verbindung zu einer Fahrzeugkarosserie 6 (in Fig. 3 bis 6 zu erkennen) aufweist. Auch die Drehachsen B, C weisen jeweils 2 Aktiv-Drehgelenke 5 auf.

In Fig. 1 sind die soeben beschriebenen Elemente jeweils mehrfach zu erkennen, da hier die ablaufende Versenkbewegung des Fahrzeugverdecks 1 in vier Schritten dargestellt ist, wobei die Pfeile 7A, 7B die Bewegungen der Drehachsen A und B verdeutlichen sollen. Im nachfolgend beschriebenen Bewegungsablauf des Fahrzeugverdecks 1 beim Versenken bezeichnen die Indizes 3 bis 6 die jeweilige Position der Drehachsen, wie sie auch in den korrespondierenden Figuren 3 bis 6 dargestellt ist. (Die Indizes 1 und 2 wurden nicht vergeben)

In einem ersten Schritt des Versenkvorgangs werden die Verdeckelemente 3 und 4 um die Drehachsen B₃ und C₃ gedreht. Die Drehachse C, die ortsfest mit der Fahrzeugkarosserie 6 verbunden ist, behält während des gesamten Versenkvorgangs ihre Position bei. Die Drehachse A bewegt sich entlang dem Pfeil 7A_{3,4} auf die Position A₄, ohne daß die Verdeckelemente 2 und 3 sich gegeneinander bewegen. Von der Position B₃ der Drehachse B bewegt diese sich entlang des durch den Pfeil 7B_{3,4} angedeutete Weges in die Position B₄. Diese Stellung des Fahrzeugverdecks 1 ist auch in der Fig. 4 zu erkennen. Im nachfolgenden Schritt des Versenkvorgangs bewegen sich die beiden Drehachsen A und B entlang der durch die Pfeile 7A_{4,5} und 7B_{4,5} angedeuteten Wege, in der auch in Fig. 5 zu erkennenden Art. Im letzten Schritt des Versenkvorgangs des Fahrzeugverdecks 1 bewegt sich anschließend die Drehachse A von ihrer Position A₅ in eine dicht bei der Drehachse C liegende Position A₆. Wie auch in Fig. 6 zu erkennen ist, ist der Versenkvorgang des Fahrzeugverdecks 1 damit abgeschlossen.

Ein Schließen des geöffneten Fahrzeugverdecks kann z.B. in genau umgekehrter Reihenfolge erfolgen.

Neben diesem beispielhaft dargestellten Versenkvorgang lassen sich durch die Aktiv-Drehgelenke 5 auch beliebig viele weitere Varianten realisieren. Die Aktiv-Drehgelenke 5, welche hier insbesondere fluidisch betrieben werden, erlauben im Allgemeinen einen Drehbereich von ca. 200° und ermöglichen vor allem bei hydraulischer Betätigung eine Variation des Drehmoments über große Bereiche. Sie lassen sich mit einer Hydraulikeinheit leicht an den zu erwartenden je nach Verdeckart sehr unterschiedlichen Drehmomentbedarf an den einzelnen Drehpunkten anpassen. Sie eignen sich damit sehr gut für die erfindungsgemäße Aufgabenstellung und können auch in spiegelbildlicher Anordnung als standardisierte, durch hohe Stückzahlen auch kostengünstige, Bauelemente in praktisch allen Arten von Fahrzeugverdecken 1 Verwendung finden. Durch ihren Einsatz wird es auch erstmals möglich, über vielteilige Fahrzeugverdecke 1 nachzudenken, da dies mit den bisher üblichen Steuergestängen bei z.B. vier oder fünf Verdeckelementen extrem aufwendig und praktisch fast nicht durchführbar war.

Das Aktiv-Drehgelenk 5 ist in Fig. 2 als Vergrößerung des Bereichs II aus Fig. 1 nochmals dargestellt. Dabei ist ein Gehäuse 8 des Aktiv-Drehgelenks 5 zu erkennen, welches fest, insbesondere drehfest, mit einem Beschlag 9 verbunden ist. Diese Einheit aus Gehäuse 8 und feststehendem Beschlag 9 wird dabei an eines der Verdeckelemente 2, 3, 4 vormontiert. Auf dem jeweils nachfolgend angeordneten Verdeckelement 2, 3, 4 und/oder der Fahrzeugkarosserie 6 wird dann ein Beschlag 10 fest angebracht. Bei der Endmontage des Fahrzeugverdecks 1 wird der später gegenüber dem Gehäuse 8 bewegliche Beschlag 10 mit einem Zwischenstück 11 auf eine Vielzahnwelle 12 des Aktiv-Drehgelenks 5 montiert. Der Beschlag 10 und das Zwischenstück 11 bilden zusammen ein Halteelement. So lassen sich bei der Montage der Verdeckelemente 2, 3, 4 entsprechend der Teilung der Vielzahnwelle 12 zahlreiche Winkelstellungen der Beschläge 9, 10 und damit der entsprechenden, mit den Beschlagen 9, 10 verbundenen Verdeckelemente 2, 3, 4 zueinander realisieren.

Die Vielzahnwelle 12 stellt den aus dem Gehäuse 8 ragenden Teil der fluidisch bewegbaren Elemente des Aktiv-Drehgelenks 5 dar und kann gegenüber dem Gehäuse 8 und dem Beschlag 9 aktiv gedreht werden. Dadurch bewegt sich dann auch das drehfest mit der Vielzahlwelle 12 verbundene Halteelement aus Beschlag 10 und Zwischenstück 11 gegenüber dem Beschlag 9 und die mit den Beschlägen 9, 10 verbundenen Verdeckelemente 2, 3, 4 erfahren eine Relativbewegung zueinander.

Die Figuren 3 bis 6 zeigen an einem Fahrzeug 13 die oben schon beschriebenen Schritte beim Versenken des Fahrzeugverdecks 1.

Selbstverständlich läßt sich die beschriebene Technik auch für fest auf einen biegesteifen Rahmen aufgespannten Stoff-Verdeckelementen 2, 3, 4 nutzen. Die biegesteifen Rahmen der Verdeckelemente entsprechen dabei aus Sicht der mechanischen Ansteuerung den steifen Elementen des Hardtops.

## Patentansprüche

1. Fahrzeug mit einem mehrteiligen, versenkbaren Fahrzeugverdeck mit wenigstens zwei biegesteifen Verdeckelementen, die schwenkbar miteinander und über wenigstens ein Verdeckelement schwenkbar mit der Fahrzeugkarosserie verbunden sind,
**dadurch gekennzeichnet,** daß zur Verbindung der wenigstens zwei biegesteifen Verdeckelemente (2,3,4) miteinander und/oder mit der Fahrzeugkarosserie (13) Drehgelenke (5) vorgesehen sind, wobei je Verbindung wenigstens eines der Drehgelenke (5) antreibbar ist.

2. Fahrzeug nach Anspruch 1,
**dadurch gekennzeichnet,** daß die antreibbaren Drehgelenke (5) einen fluidischen Antrieb aufweisen.

3. Fahrzeug nach Anspruch 1 oder 2,
**dadurch gekennzeichnet,** daß die antreibbaren Drehgelenke (5) unabhängig voneinander betätigbar sind.

4. Fahrzeug nach Anspruch 3,
**dadurch gekennzeichnet,** daß zur Koordinierung der Bewegungen der einzelnen Verdeckelemente (2,3,4) zueinander eine elektrische und/oder elektromechanische Steuereinheit vorgesehen ist.

5. Fahrzeug nach einem der Ansprüche 1 bis 4,
**dadurch gekennzeichnet,** daß wenigstens ein Bereich der Achse (12) der Drehgelenke (5) ein Vielzahnprofil aufweist, wobei die Verbindung der Verdeckelemente (2,3,4) miteinander und/oder mit der Fahrzeugkarosserie (13) über ein Halteelement (10,11) mit einem InnenVielzahnprofil auf dieser Achse (12) erfolgt, und damit eine spiegelbildliche Anordnung erlaubt.
